**Europäisches Patentamt**

**European Patent Office**

**Office européen des brevets**

(11) Publication number: **0 142 903**
**B1**

(12) **EUROPEAN PATENT SPECIFICATION**

(45) Date of publication of patent specification: **06.09.89**

(21) Application number: **84201696.6**

(22) Date of filing: **21.11.84**

(51) Int. Cl.⁴: **B 01 J 20/04,** B 65 D 81/24,
A 23 F 5/10

(54) Absorbent for carbon dioxide or for carbon dioxide and oxygen, a method of making the same, and the use of the absorbent in a package.

(30) Priority: **22.11.83 NL 8304015**

(43) Date of publication of application:
**29.05.85 Bulletin 85/22**

(45) Publication of the grant of the patent:
**06.09.89 Bulletin 89/36**

(84) Designated Contracting States:
**AT BE CH DE FR GB IT LI LU NL SE**

(56) References cited:
EP-A-0 036 575
DE-B-1 109 499
DE-B-1 267 525
DE-C- 607 930
NL-A-7 612 376
NL-C- 47 309
US-A-1 333 524

The file contains technical information
submitted after the application was filed and
not included in this specification

(73) Proprietor: **Douwe Egberts Koninklijke**
**Tabaksfabriek- Koffiebranderijen-Theehandel**
**N.V.**
**Keulsekade 143**
**NL-3532 AA Utrecht (NL)**

(72) Inventor: **Kaper, Louris**
**Wildenborg 42**
**NL-3772 ZC Barneveld (NL)**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

Courier Press, Leamington Spa, England.

**Description**

The invention is directed to an absorbent for carbon dioxide or carbon dioxide and oxygen, as well as to a package containing roast coffee and said adsorbent.

As is well known, freshly roasted coffee contains a considerable amount of carbon dioxide, which slowly escapes from the coffee. The rate at which this takes place depends on the degree of division of the coffee, and is higher with ground coffee than with unground beans. Furthermore, roasted coffee is highly sensitive to oxygen, which by reacting with coffee components causes rapid aging of the coffee. To prevent such reactions to the extent possible, roasted coffee is often packed in vacuo or under a protective gas, but in neither method of packaging can the packaged coffee be prevented from remaining in contact with a minor quantity of oxygen, because the oxygen cannot be fully excluded. If it is desired for roasted coffee to be packaged in vacuo or under a protective gas, it is necessary to wait until so much $CO_2$ has escaped from the coffee that the residual concentration is insufficient to remove the vacuum or to cause the package with the protective gas to bulge.

For the packaging of roasted coffee, $CO_2$-permeable foils have been developed. These, however, exhibit the disadvantage that, after some time, oxygen can penetrate the package from the outside. It is also known to provide an excess pressure valve in the package, which permits $CO_2$ gas collecting in the package to escape when a certain pressure is exceeded. Such valves, however, require complicated and expensive provisions in packaging machines.

In Dutch Patent Application No. 7612376, granular absorbents made from cement, an inorganic swelling agent, sand and water are described. According to this publication, a water to cement ratio of less than 1:3 is to be used as no more water can be retained. The adsorbent according to this publication is especially suitable for removing odours. In view thereof it is not suitable for use in conjunction with roast coffee, as this would change the characteristics of the coffee, which would lead to a deterioration of the coffee during storage.

In EP—A—36575 an absorbent for oxygen and carbon dioxide is described consisting of particles of a number of different products, which are mixed. This absorbent has to be used in a separate sachet, in order to prevent segregation of the absorbent mixture and to prevent contamination of the coffee.

The present invention concerns the use of a solid cement product containing gel pores and larger pores, prepared from a water-cement mixture having a water-cement ratio of more than 1:2, in the form of bodies, lumps or powder as an absorbent for carbon dioxide or carbon dioxide and oxygen.

The absorbent can be made very easily from cheap materials and can easily be packed along with roasted coffee.

The absorbent according to the invention can be prepared, in its first embodiment, by allowing a cement paste containing cement, a water-soluble salt, and at least 50 parts by weight of water per 100 parts by weight of cement to set and harden, and drying and, if desired, crushing the resulting cement brick.

The second embodiment of the absorbent according to the invention is characterized by iron powder containing cement brick which, in addition to so-called "gel pores", contains larger pores, and which cement brick has the shape of bodies, lumps or a powder.

The second embodiment of the absorbent according to the invention can be prepared by allowing a cement paste, containing cement, iron powder, a water-soluble inorganic salt and at least 50 parts by weight of water per 100 parts by weight of cement to set and harden, and drying and, if desired, crushing the resulting cement brick.

As is well known, from a paste containing cement and water, there is formed by setting and hardening cement brick having a $Ca(OH)_2$ containing porous structure, in which the pore size depends on the water-to-cement weight ratio in the paste. If the water-to-cement ratio is less than 1:2, small pores are formed only, namely, the so-called "gel pores", but when the water-to-cement ratio is more than a 1:2, larger pores are formed as well.

It has been found that the presence of such larger pores is necessary for the present purposes, namely, a rapid absorption of $CO_2$ and, possibly, oxygen from the ambient atmosphere, in which $CO_2$ is bonded to the $Ca(OH)_2$ formed by the reaction of the cement clinker minerals with water, and oyxgen is bonded to the iron powder which may be present in the cement brick.

The absorbent according to the invention can be made using a commercial cement of current composition. As the $CO_2$ absorption capacity of the cement brick is dependent upon the $Ca(OH)_2$ content of the cement brick, cement types which during setting and hardening form relatively much $Ca(OH)_2$ are preferred. Accordingly, particularly suitable are cement types having a high tricalcium silicate content, such as portland cement, or having a high tricalcium aluminate content, such as aluminum cement (ciment fondu). The $CO_2$-absorption capacity can further be increased, as desired, by adding $Ca(OH)_2$ to the cement paste. The rate of absorption, however, is mainly determined by the presence of large pores in the cement brick, which are formed if the cement paste contains at least 50 parts by weight of water per 100 parts by weight of cement.

When the cement paste contains iron powder, this is incorporated into the porous structure of the cement brick during binding and hardening, where it is available as a potential oxygen binder. As the iron particles are moistened with the $Ca(OH)_2$ dissolved in moisture residues, which is also present in the porous structure, the pH at the iron surface has a value of between 10 and 12. As is well known, in this pH range the iron surface is passivated, i.e., a spontaneous reaction between iron and oxygen (from the air) can hardly, if at all, occur. If the absorbent is introduced into a $CO_2$-rich atmosphere, the pH at the iron surface is reduced until it reaches the level at which the reaction between iron and oxygen is initiated, and oxygen is bonded. In atmospheric air the $CO_2$-content is too low to lower the pH of the iron surface sufficiently to make possible that oxygen is bonded. This means that the absorbent according to the invention can be kept in the air without particular precautions.

To produce an absorbent having a favourable porosity, the quantity of water incorporated in the cement paste in preparing the absorbent is preferably 100—200 parts by weight per 100 parts by weight of cement.

In the cement paste, the water-soluble inorganic salt functions as an accelerator of the setting and hardening of the cement. Preferred salts are the chloride, bromide, iodide, chlorate, nitrite, nitrate, or thiocyanate of sodium, lithium, ammonium, calcium or magnesium. If no iron powder is incorporated in the cement paste, the salt is preferably used in a proportion of between 1 and 25 parts by weight per 100 parts by weight of cement. When iron powder is incorporated in the cement paste the inorganic salt still has a particular function in the ready absorbent, namely, as an accelerator of oxygen absorption. In that case the salt is preferably used in a proportion of 50—125 parts by weight per 100 parts by weight of cement, in particular of about 100 parts by weight per 100 parts by weight of cement.

The iron powder, if used, does not have to satisfy particular requirements of purity, but without any objection may contain the usual contaminations. Reduced iron powder, electrolytic iron powder and atomized iron powder are examples of suitable material. The amount of iron powder in the cement paste can be selected depending on the amount of oxygen to be bonded by the ready absorbent. As the rate of oxygen absorption has been found to depend to a certain extent on the iron content of the absorbent, the proportion of iron powder in the cement paste is preferably at least 50 parts by weight per 100 parts by weight of cement, in particular between 100 and 250 parts by weight per 100 parts by weight of cement. For a good contact between the iron powder in the ready absorbent and the oxygen to be absorbed, it is desirable, that the powder particles should be less than 1 mm, in particular less than 300 μm.

The starting materials are made up with water to a pasty mixture. If so much water is used that the mixture is too liquid, a thickening agent, for example, on the basis of a carboxy alkyl cellulose, may be added to produce a pasty consistency. Also, fine sand with a particle size of for example 200—300 μm may be incorporated in the cement paste to promote the formation of the desired porous structure.

The cement paste is homogenized as best as possible and then introduced into suitable moulds, whereafter the paste is allowed to set and harden. The resulting cement bricks are subsequently dried, preferably at 105°C for 1—2 hours, and can then be used as such or be crushed to form lumps or to form a powder.

The resulting absorbent can be successfully used for absorbing carbon dioxide or carbon dioxide and oxygen in a package containing ground or non-ground roasted coffee in a closed envelope. Preferably, the absorbent is introduced into the package in such a manner that it is separated from the coffee by means of a gas-permeable material. If the closed envelope consists of multifold material, the inner or innermost wall may be gas-permeable, and the absorbent may be introduced between the inner or innermost wall and the next wall. Owing to the presence of the absorbent according to the invention, in spite of the generation of $CO_2$ by the roasted coffee, a subatmospheric pressure is generated in the package.

The invention is illustrated in and by the following examples.

Example I

Two cement pastes A and B were prepared, having the following compositions:

|  | A | B |
|---|---|---|
| Portland cement, parts by weight | 12 | 12 |
| Water, parts by weight | 12 | 3 |
| $CaCl_2$, parts by weight | 2 | 2 |

The pastes were poured into separate moulds, and left therein at about 50°C for 48 hours. Thereafter the resulting mouldings (20×20×20 mm) were taken from the moulds and dried at 105°C for 1 hour. Subsequently, tests were conducted, in which the absorption behaviour of absorbent A according to the invention was compared to that of absorbent B, which as a result of the low water-to-cement weight ratio of 1:4 only contained so-called gel pores, and accordingly did not satisfy the present invention. The rates were carried out as follows.

Identical samples of 250 g freshly-roasted ground coffee with a gas content of 0.42% by weight were introduced into hermetically sealable steel cylinders equipped with a pressure gauge suitable for measuring a subatmospheric pressure. Absorbent A was added to the contents of one of the cylinders, and absorbent B to the contents of the second cylinder. After sealing the cylinders, the percentage of $CO_2$ in the

cylinders was measured from time to time, and any subatmospheric pressure was noted. The results are listed in Table A.

TABLE A

| | Test 1—absorbent A | | Test 2—absorbent B | |
|---|---|---|---|---|
| Time (hours) | CO$_2$ (vol. %) | Pressure below atmospheric (cm Hg) | CO$_2$ (vol. %) | Pressure below atmospheric (cm Hg) |
| 0.25 | 5.7 | 2 | 18.5 | — |
| 0.50 | 5.3 | 5 | | |
| 1.00 | 4.1 | 8 | 16.2 | — |
| 1.25 | 2.6 | 12 | | |
| 2.00 | | | 16.5 | — |
| 2.50 | | | 16.2 | 4 |
| 2.75 | | | 16.0 | 4 |
| 20.25 | | | 1.0 | 18 |
| 21.00 | 0.1 | 17 | | |
| 21.25 | | | 1.0 | 19 |
| 21.75 | | | 1.0 | 19 |
| 22.00 | 0.1 | 19 | | |

These results show that, in test I, virtually from the beginning, a subatmospheric pressure was generated in the cylinder owing to the rapid absorption of the CO$_2$ generated by the coffee, which had already partially displaced the air present in the cylinder before it was sealed, by absorbent A according to the invention. On the other hand, in test 2, it took more than 2 hours before any subatmospheric pressure was measured. The rapid absorption of the CO$_2$ by the absorbent according to the invention prevents rupture of a flexible packaging material as a result of excess pressure in the package.

Example II
    An absorbent C according to the present invention was prepared from a cement paste having the following composition:
        10 g portland cement
        10 g water
         5 g CaCl$_2$
        20 g reduced iron powder (max. particle size 200 μm)
    First the cement, water and CaCl$_2$ were mixed to form a viscous paste, whereafter the iron powder was added with stirring. The paste was poured into a mould, and left therein at 50°C for 48 hours. The resulting absorbent C was taken from the mould and dried at 105°C for 1 hour.
    Absorbent C was introduced together with 250 g ground coffee, roasted approximately 1 hour before, into a hermetically sealable vessel just capable of containing the coffee and the absorbent. After sealing the vessel, the CO$_2$ and O$_2$ content in the vessel were measured from time to time, and a subatmospheric pressure, if any, was noted.
    In an analogous manner, a test was conducted with an absorbent D according to the invention, prepared from a cement paste having the following composition:
        8 g portland cement
        8 g water
        8 g CaCl$_2$
        16 g reduced iron powder
    Absorbent D was dried at 105°C for 2 hours.
    The result of the two tests are listed in Table B.

4

TABLE B

| | Test 3—absorbent C | | | Pressure below atmospheric (cm Hg) | Test 4—absorbent D | | | Pressure below atmospheric (cm Hg) |
|---|---|---|---|---|---|---|---|---|
| | Time (hours) | O$_2$ (vol. %) | CO$_2$ (vol. %) | | Time (hours) | O$_2$ (vol. %) | CO$_2$ (vol. %) | |
| | 0 | 17.55 | 14.7 | — | 0 | 15.1 | 19.04 | — |
| | 0.6 | 14.3 | 19.5 | — | 0.33 | 15.1 | 22.4 | — |
| | 0.8 | 15.4 | 21.9 | — | 0.66 | 13.6 | 21.9 | — |
| | 1.0 | 14.3 | 20.8 | — | 0.83 | 12.3 | 21.3 | — |
| | 1.4 | 13.1 | 19.2 | — | 1.25 | 11.2 | 18.4 | — |
| | 1.7 | 12.5 | 17.0 | — | 1.5 | 10.7 | 17.3 | 1 |
| | 1.9 | 12.0 | 15.2 | 1 | 1.75 | 9.5 | 16.3 | 3 |
| | 2.15 | 11.6 | 13.3 | 3 | 2.17 | 8.5 | 15.0 | 8 |
| | 2.65 | 10.3 | 12.0 | 8 | 2.58 | 8.0 | 14.1 | 10 |
| | 19.6 | 0.9 | 0.36 | 26 | 18.92 | 1.7 | 2.1 | 25 |
| | 20.2 | 0.71 | 0.32 | 26 | 20.08 | 1.6 | 1.7 | 25 |
| | 22.1 | 0.67 | 0.28 | 29 | 20.75 | 1.4 | 1.6 | 26 |
| | 25.2 | 0.65 | 0.24 | 29 | 25.0 | 1.2 | 1.5 | 27 |
| | 92.5 | 0.62 | 0.05 | 29 | 92.1 | 0.6 | 0.10 | 30 |
| | 116.5 | 0.60 | 0.05 | 28 | 116.0 | 0.6 | 0.07 | 30 |
| | 140.5 | 0.57 | 0.01 | 29 | 164.0 | 0.6 | — | 32 |
| | 164.5 | 0.55 | 0.01 | 29 | | | | |

These results show that the absorbent according to the second embodiment of the invention is effectively capable of simultaneously absorbing oxygen and CO$_2$.

Example III

In order to show that the absorbent according to the second embodiment of the invention does not lose its capacity of absorbing oxygen from contact with oxygen in the air, the absorbent D used in test 4 (Example II) after the test was kept in the air for two months. The absorbent was dried at 105°C for 1 hour, and subsequently tested, in the manner described in Example II, with freshly-roasted ground coffee with a gas content of 0.45 percent by weight. The results are listed in Table C.

TABLE C

| Time (hours) | O$_2$ (vol. %) | CO$_2$ (vol. %) |
|---|---|---|
| 4 | 10.8 | 8.3 |
| 6 | 8.0 | 5.4 |
| 70 | 0.7 | 0.1 |

Example IV.

In the manner described in Example II, an absorbent was prepared from a cement paste having the following composition:

10 g portland cement
10 g water
2 g $CaCl_2$
10 g reduced iron powder

and subsequently tested in the manner described.

The results are listed in Table D.

TABLE D

| Time (hours) | $O_2$ (vol. %) | $CO_2$ (vol. %) |
|---|---|---|
| 0 | 18.6 | 2.3 |
| 0.25 | 18.3 | 2.4 |
| 0.50 | 18.3 | 2.7 |
| 1.25 | 18.0 | 2.5 |
| 3.25 | 17.9 | 1.4 |
| 4.25 | 17.4 | 1.1 |
| 21.0 | 16.8 | <0.1 |
| 26.0 | 16.2 | <0.1 |

These results show that the absorbent effectively absorbed the $CO_2$ but, as a result of the too low salt content, was insufficiently capable of absorbing oxygen.

**Claims**

1. Use of a solid cement product containing gel pores and larger pores, prepared from a water-cement mixture having a water-cement ratio of more than 1:2, in the form of bodies, lumps or powder, as an absorbent for carbon dioxide or carbon dioxide and oxygen.

2. Use according to claim 1, wherein the cement product also contains iron powder.

3. Use according to claims 1 or 2, wherein the cement product is present in a sealed, gas-tight envelope containing roast coffee.

4. Package containing roast ground coffee or roast coffee beans in a sealed, gas-tight envelope, wherein the envelope also contains as absorbent for carbon dioxide and oxygen, a solid cement product containing gel pores and larger pores, in the form of lumps, bodies or powder.

5. Package according to claim 4, wherein the absorbent is separated from the coffee by means of a gas permeable material.

6. Package according to claim 4 or 5, wherein the absorbent also contains iron powder.

7. Package according to claims 4—6, wherein as the cement, portland cement or aluminum cement is used.

8. Package according to claims 4—7, wherein the absorbent additionally contains an inorganic salt.

9. Package according to claim 8, wherein as the inorganic salt a chloride, bromide, iodide, chlorate, nitrite, nitrate or thiocyanate of sodium, potassium, lithium, ammonium, calcium or magnesium is used.

10. Package according to claim 9, wherein the cement product contains 1—25 parts by weight of inorganic salt per 100 parts by weight of cement.

11. Package according to claim 10, wherein the cement product contains 50—125 parts by weight of inorganic salt per 100 parts by weight of cement.

12. Package according to claims 6—11, wherein the iron powder has an average particle size of less than 300 µm.

13. Package according to claims 6—12, wherein the cement product contains at least 50 parts by weight of iron powder per 100 parts by weight of cement.

14. Package according to claim 13, wherein the cement product contains 100—250 parts by weight of iron powder per 100 parts by weight of cement.

15. Package according to claims 4—14, wherein additionally calcium hydroxide is incorporated in the cement product.

16. Package according to claims 4—15, wherein the cement product has been prepared by allowing a cement paste containing cement, a water-soluble inorganic salt and at least 50 parts by weight of water per 100 parts by weight of cement to set and harden, and drying and, if desired, crushing the resulting cement product.

17. Package according to claim 16, wherein a cement paste containing cement, iron powder, a water-soluble inorganic salt and at least 50 parts by weight of water per 100 parts by weight of cement is allowed to set and harden, is dried and, if desired, is crushed.

18. Package according to claims 16—17, wherein the cement paste contains 100—200 parts by weight of water per 100 parts by weight of cement.


## Patentansprüche

1. Verwendung eines festen Zementproduktes mit Gelporen und grösseren Poren, hergestellt aus einem Wasser - Zement - Gemisch mit einem Wasser - Zement - Verhältnis von mehr als 1:2, in Form von Körpern, Stücken oder Pulver, als Absorptionsmittel für Kohlendioxyd oder Kohlendioxyd und Sauerstoff.

2. Verwendung nach Anspruch 1, wobei das Zementprodukt auch Eisenpulver enthält.

3. Verwendung nach Anspruch 1 oder 2, wobei das Zementprodukt in einer gerösteten Kaffee enthaltenden abgeschlossenen gasdichten Hülle anwesend ist.

4. Packung, gefüllt mit göstetem gemahlenem Kaffee oder gerösteten Kaffeebohnen in einer abgeschlossenen gasdichten Hülle, wobei die Hülle als Absorptionsmittel für Kohlendioxyd und Sauerstoff auch ein festes Zementpordukt mit Gelporen und grösseren Poren, in Form von Stücken, Körpern oder Pulver, enthält.

5. Packung nach Anspruch 4, wobei das Absorptionsmittel durch ein gasdurchlässiges Material vom Kaffee getrennt ist.

6. Packung nach Anspruch 4 oder 5, wobei das Absorptionsmittel auch Eisenpulver enthält.

7. Packung nach Anspruch 4 bis 6, wobei als Zement Portlandzement oder Aluminiumzement verwendet ist.

8. Packung nach Anspruch 4 bis 7, wobei das Absorptionsmittel zusätzlich ein anorganisches Salz enthält.

9. Packung nach Anspruch 8, wobei als anorganisches Salz ein Chlorid, Jodid, Chlorat, Nitrit, Nitrat oder Thiocyanat von Natrium, Kalium, Lithium, Ammonium, Calcium oder Magnesium verwendet ist.

10. Packung nach Anspruch 9, wobei das Zementprodukt 1 bis 25 Gewichtsteile anorganisches Salz pro 100 Gewichtsteile Zement enthält.

11. Packung nach Anspruch 10, wobei das Zementprodukt 50 bis 125 Gewichtsteile anorganisches Salz pro 100 Gewichtsteile Zement enthält.

12. Packung nach Anspruch 6 bis 11, wobei das Eisenpulver eine durchschnittliche Teilchengrösse von weniger als 300 µm aufweist.

13. Packung nach Anspruch 6 bis 12, wobei das Zementprodukt mindestens 50 Gewichtsteile Eisenpulver pro 100 Gewichtsteile Zement enthält.

14. Packung nach Anspruch 13, wobei das Zementprodukt 100 bis 250 Gewichtsteile Eisenpulver pro 100 Gewichtsteile Zement enthält.

15. Packung nach Anspruch 4 bis 14, wobei zusätzlich Calciumhydroxyd in das Zement produkt aufgenommen ist.

16. Packung nach Anspruch 4 bis 15, wobei man das Zementprodukt herstellt, indem man einen Zementbrei, der Zement, ein wasserlösliches anorganisches Salz und mindestens 50 Gewichtsteile Wasser pro 100 Gewichtsteile Zement enthält, abbinden und trocknen lässt und erwünschtenfalls des anfallende Zementprodukt zerkleinert.

17. Packung nach Anspruch 16, wobei man einen Zementbrei, der Zement, Eisenpulver, ein wasserlösliches anorganisches Salz und mindestens 50 Gewichtsteile Wasser pro 100 Gewichtsteile Zement enthält, abbinden lässt, trocknet und erwünschtenfalls zerkleinert.

18. Packung nach Anspruch 16—17, wobei der Zementbrei 100 bis 200 Gewichtsteile Wasser Pro 100 Gewichtsteile Zement enthält.


## Revendications

1. Emploi d'un produit de ciment solide contenant des pores de gel et des pores plus grands, préparé d'un mélange de ciment-eau ayant une proportion eau-ciment de plus de 1:2, en forme de corps, morceaux ou poudre, comme absorbant pour anhydride carbonique ou anhydride carbonique et oxygène.

2. Emploi selon la revendication 1, où le produit de ciment contient également de la poudre de fer.

3. Emploi selon les revendications 1 ou 2, où le produit de ciment est présent dans une enveloppe obturée étanche au gaz contenant du café grillé.

4. Emballage contenant du café en poudre grillé ou des grains de café grillés dans une enveloppe obturée, étanche au gaz, où l'enveloppe contient également comme absorbant pour l'anhydride carbonique et l'oxygène, un produit de ciment solide contenant des pores de gel et des pores plus grands, en forme de morceaux, corps ou poudre.

5. Emballage selon la revendication 4, où l'absorbant est séparé du café à l'aide d'un matériau perméable au gaz.

6. Emballage selon la revendication 4 ou 5, où l'absorbant contient également de la poudre de fer.

7. Emballage selon les revendications 4—6, où l'on utilise comme ciment, du ciment de Portland ou du ciment d'aluminium.

8. Emballage selon les revendications 4—6, où l'absorbant contient en plus un sel inorganique.

9. Emballage selon la revendication 8, où l'on utilise comme sel inorganique un chlorure, bromure, iodure, chlorate, nitrite, nitrate ou thiocyanate de sodium, potassium, lithium, ammonium, calcium ou magnésium.

10. Emballage selon la revendication 9, où le produit de ciment contient 1—25 parties en poids de sel inorganique par 100 parties en poids de ciment.

11. Emballage selon la revendication 10, où le produit de ciment contient 50—125 parties en poids de sel inorganique par 100 parties en poids de ciment.

12. Emballage selon les revendications 6—11, où la poudre de fer possède une dimension granulométrique moyenne de moins 300 µm.

13. Emballage selon les revendications 6—12, où le produit de ciment contient au moins 50 parties en poids de poudre de fer par 100 parties en poids de ciment.

14. Emballage selon la revendication 13, où le produit de ciment contient 100—250 parties en poids de poudre de fer par 100 parties en poids de ciment.

15. Emballage selon les revendications 4—14, où en plus on a incorporé de l'hydroxyde de calcium au produit de ciment.

16. Emballage selon les revendications 4—15, où le produit de ciment a été préparé en permettant à un ciment contenant une pâte de ciment, un sel inorganique soluble dans l'eau et au moins 50 parties en poids d'eau par 100 parties en poids de ciment de faire prise et de durcir, en le séchant et, si nécessaire, en broyant le produit de ciment résultant.

17. Emballage selon la revendication 16, où un ciment contenant une pâte de ciment, de la poudre de fer, un sel inorganique soluble dans l'eau et au moins 50 parties en poids d'eau par 100 parties en poids de ciment est permis de faire prise et de durcir, est séché et, si nécessaire, est broyé.

18. Emballage selon les revendications 16—17, où la pâte de ciment contient 100—200 parties en poids d'eau par 100 parties en poids de ciment.